# EUROPEAN PATENT SPECIFICATION

(11) **EP 1 873 047 B1**
(45) Date of publication and mention of the grant of the patent: **25.02.2009**
(21) Application number: 07106293.9
(22) Date of filing: 17.04.2007
(51) Int. Cl.: B62J 25/00

(54) **Footboard structure for vehicle**
Fußbrettstruktur für ein Fahrzeug
Structure d'appui-pied pour véhicule

(30) Priority: 28.06.2006 JP 2006178102
(43) Date of publication of application: 02.01.2008
(73) Proprietor: Honda Motor Co., Ltd., Tokyo 107-8556 (JP)
(72) Inventor: Inoue, Yusuke, Saitama 351-0193 (JP)
(74) Representative: Rupp, Christian

(56) References cited:
- FR-A- 627 136
- GB-A- 129 174
- GB-A- 139 924
- GB-A- 178 231
- GB-A- 2 093 774
- GB-A- 191 503 924
- GB-A- 191 514 677
- JP-A- 2 279 483
- US-A- 5 720 359
- US-A1- 2003 071 438

## Description

The present invention relates to a footboard structure provided in a vehicle such as a motorcycle.

There is known a motorcycle in which a footboard is connected to a body frame via a support stay, and the rider riding on a seat stretches his/her feet forward so as to place the feet on the footboard (for example, see Patent Document 1). However, the position of the footboard cannot be adjusted in this type of vehicle. In view of this, there has been proposed a motorcycle in which a pair of left and right swing arms are provided at the front portion of the body frame, and a supporting column for supporting a footrest platform is inserted through each of the swing arms, whereby the longitudinal position of the footrest platform is adjusted through the swing motion of each swing arm, the height of the footrest platform is adjusted by changing the insertion position of each supporting column, and a bolt is fastened at the position thus adjusted to thereby fix the position of the footrest platform (see, for example, Patent Document 2).
[Patent Document 1] JP-A No. H11-227659
[Patent Document 2] JP-A No. S60-60084

In the related art, the footrest platforms are individually moved on the left and right sides to adjust their positions, and therefore it is difficult to align the positions of the footrest platforms. Further, as the bolts loosen, the positions of the footrest platforms are displaced, thus requiring maintenance such as frequent retightening of the bolts.

Furthermore, GB 129,174 A discloses a footboard structure for a vehicle, according to the preamble of claim 1, in which a footboard is connected to a body frame via a support stay B, wherein a height adjusting member is arranged between a footboard support portion of the support stay and the footboard to enable adjustment of a longitudinal or vertical position of the footboard. Height can be adjusted by changing the angle of an arm C which has an inclined surface that changes in height with respect to the horizontal.

The present invention has been made in view of the above-described circumstances, and accordingly it is an object of the present invention to provide a footboard structure for a vehicle which enables easy alignment of footboard positions and which also prevents the footboard positions from being easily displaced.

In order to address the above-mentioned problems, according to the present invention, there is provided a footboard structure for a vehicle in which a footboard is connected to a body frame via a support stay, wherein a height adjusting member is arranged between a footboard support portion of the support stay and the footboard to enable adjustment of a longitudinal or vertical position of the footboard.

According to the present invention, a height adjusting member is arranged between the footboard support portion of the support stay and the footboard to thereby enable adjustment of the longitudinal or vertical position of the footboard. Positioning of the footboard can be thus effected by means of the height adjusting member. Accordingly, by aligning the height adjustment members of the footboards on the left and right sides, the positions of the footboards can be easily aligned and, in addition, the positions of the footboards are not easily displaced.

According to the present invention, the height adjusting member has an inclined surface that is formed as a surface that is inclined with respect to a bottom surface of the height adjusting member. This allows easy adjustment of the mounting angle of the footboard.

In the above-mentioned construction, it is preferable that the footboard have a step floor portion and a footrest portion. According to this construction, the height adjusting member can be arranged in each of the step floor portion and footrest portion to independently adjust their respective positions.

In the above-mentioned construction, it is preferable that a fixing member for fixing the heel of a foot in position be provided in the footrest portion so as to be movable. According to this construction, the fixing member for fixing the heel of a foot in position can be moved in accordance with the body shape or the like of an occupant.

In the above-mentioned construction, it is preferable that the footboard be supported on the footboard support portion of the support stay via an elastic member. According to this construction, it is possible to prevent vibrations transmitted from the road surface during driving, or engine vibrations from being transmitted to the footboard, thus providing improved comfort for the occupant.

According to the present invention, the height adjusting member is arranged between the footboard support portion of the support stay and the footboard to thereby enable adjustment of the longitudinal or vertical position of the footboard. Therefore, by aligning the height adjustment members of the footboards on the left and right sides, the positions of the footboards can be easily aligned and, in addition, the positions of the footboards are not easily displaced.
Further, since the height adjustment member has an inclined surface that changes in height, the mounting angle of the footboard can be easily adjusted in accordance with the angle of the inclined surface of the height adjusting member.
Further, since the footboard has a step floor portion and a footrest portion, the step floor portion and the footrest portion can be independently adjusted in position.
Further, since a fixing member for fixing the heel of a foot in position is provided in the footrest portion so as to be movable, the fixing member for fixing the heel of a foot in position can be moved in accordance with the body shape or the like of an occupant.
Further, since the footboard is supported on the footboard support portion of the support stay via an elastic member, it is possible to prevent vibrations from being transmitted to the footboard.
Fig. 1 is a side view of a motorcycle according to an embodiment of the present invention.
Fig. 2 is an enlarged side view of the front portion of the motorcycle.
Fig. 3 is an enlarged front view of the front portion of the motorcycle.
Fig. 4 is an enlarged plan view of the front portion of the motorcycle.
Fig. 5 is a side view of a footboard unit.
Fig. 6 is a plan view of a first support stay of the footboard unit.
Fig. 7 is a side view of the first support stay.
Fig. 8 is a plan view of a second support stay of the footboard unit.
Fig. 9 is a side view of the second support stay.
Fig. 10 is a view showing the connecting structure of a footrest portion of the footboard unit.
Fig. 11 is a view showing a fixing member of the footboard unit together with the construction in the vicinity thereof.
Fig. 12 is a sectional view of Fig. 11.
Fig. 13 is a view showing a modification of a height adjusting member of the footboard unit.
Fig. 14 is a side view of the footboard unit.
Fig. 15 is a view showing a modification of the height adjusting member of the footboard unit.
Fig. 16 is a side view of the footboard unit.
Fig. 17 is a view showing a modification of the height adjusting member of the footboard unit.
Fig. 18 is a view showing a modification of the height adjusting member of the footboard unit.

An embodiment of the present invention will now be described with reference to the attached drawings. It should be noted that in the following description, the front, rear, left, and right directions are defined with respect to the body of a vehicle.

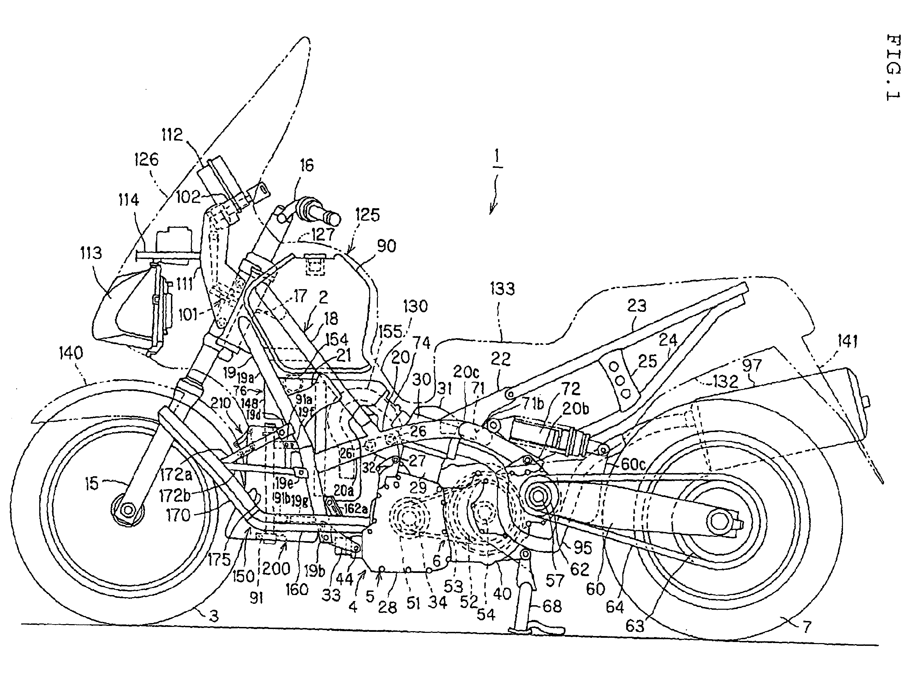

Fig. 1 is a side view of a motorcycle according to this embodiment. A body frame 2 of a motorcycle 1 includes: a head pipe 17 for steerably supporting a pair of left and right front forks 15, to which a front wheel 3 is journalled, and a steering handlebar 16 connected to the front forks 15; a pair of left and right down pipes 18, 18 extending downwardly rearward from the head pipe 17; a pair of left and right lower pipes 19, 19 which are located below the down pipes 18, 18 and coupled to the head pipe 17,and extend downwardly rearward at a steeper inclination than both the down pipes 18, 18; and a pair of left and right main pipes 20, 20 which are coupled to the lower pipes 19, 19 and extend rearward, and to the intermediate portions of which the rear ends of both the down pipes 18, 18 are coupled.

The lower pipes 19, 19 have upper-side lower pipes 19a, 19a extending downwardly rearward from the head pipe 17, and a lower-side lower pipes 19b, 19b joined to the lower ends of the upper-side lower pipes 19a, 19a and extending downwardly rearward at a steeper inclination than the upper-side lower pipe 19a. The lower-side lower pipes 19b, 19b serve as connecting members between the upper-side lower pipes 19a, 19a and the main pipes 20, 20. Further, reinforcing connecting plates 21, 21 are provided between the intermediate portions of the left and right pairs of down pipes 18, 18 and lower pipes 19, 19. It should be noted that the upper-side lower pipes 19a, 19a and the lower-side lower pipes 19b, 19b may be formed integrally.

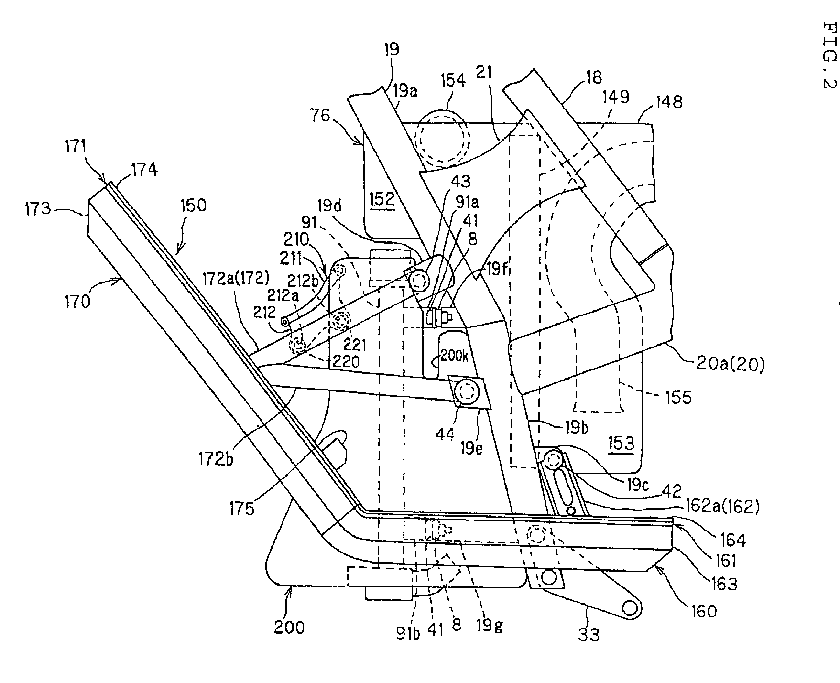

As shown in Fig. 2, the main pipe 20 is formed by an integral connection of a front-half inclined portion 20a extending upwardly rearward from an upper portion of the lower-side lower pipe 19b, a rear-half inclined portion 20b extending downwardly rearward, and a curved portion 20c curved so as to bulge upward and connecting between the rear end of the front-half inclined portion 20a and the front end of the rear-half inclined portion 20b. The main pipe 20 is made of a square tube in the shape of a substantially right-angled quadrilateral that is more elongated in the vertical direction than in the lateral direction. Further, the lower end of the down pipe 18 is coupled to the intermediate portion of the front-half inclined portion 20a by welding.

The front portion of the rear-half inclined portion 20b is joined to the connecting plate 22 by welding. The front end of a seat rail 23 extending upwardly rearward is connected to the connecting plate 22. The rear portions of a left and right pair of the seat rails 23, 23 are integrally connected to each other. In this embodiment, a part of the front-end side of the connecting plate 22 is arranged so as to lie on the curved portion 20c. Accordingly, the connecting plate 22 and the seat rail 23 can be efficiently connected to the front portion of the rear-half inclined portion 20b in the main pipe 20. Further, the rear ends of rear pipes 24, 24, which extend upwardly rearward with their front ends joined to the rear end of the rear-half inclined portion 20b, are joined to the rear portions of the seat rails 23, 23 by welding. Further, reinforcing connecting plates 25, 25 are provided between the intermediate portions of the left and right pairs of seat rails 23, 23 and rear pipes 24, 24.

A pair of left and right first engine hangers 32, 32 are provided in portions of the main pipes 20, 20 near the lower end of the down pipe 18. Second engine hangers 33, 33 are provided to the lower-side lower pipes 19b, 19b. A power unit 4 is supported onto the substantially longitudinally central position of the body frame 2 by means of the engine hangers 32, 32, 33, 33.
The power unit 4 includes an engine 5 and a transmission unit 6. A water cooling type single-cylinder 4-cycle engine is employed as the engine 5. The engine 5 includes a crankcase 28, a cylinder block 29 having a vertically extending cylinder axis and erected from the crankcase 28, a cylinder head 30 connected to the upper end of the cylinder block 29, and a head cover 31 connected to the top portion of the cylinder head 30.

In this embodiment, at a position in front of the cylinder block 29, an upper portion of the crankcase 28 is fastened to the first engine hanger 32 with a bolt 27, and a lower front-side portion of the crankcase 28 is fastened to the second engine hanger 33 with a bolt 44. The cylinder head 30 is arranged between the curved portions 20c of both the main pipes 20, 20. Since the cylinder block 29 is erected from the crankcase 28, even when the engine 5 has a relatively large engine height, a sufficient ground clearance can be secured without bringing an upper portion (the cylinder head 30 or the like) of the engine 5 into interference with the body frame 2.

Further, the engine 5 with a high rigidity can be supported on the main pipes 20, 20 and the down pipes 18, 18. Furthermore, the first engine hangers 32, 32 are fixed to the front-half inclined portions 20a, 20a of both the main pipes 20, 20 by fastening with a pair of bolts 26, 26 sandwiching the extension of the centerline of the down pipe 18 from both sides. The crankcase 28 of the engine 5 is supported onto the first engine hangers 32, 32 by fastening with the bolt 27 arranged on the extension of the centerline of each of the down pipes 18, 18.
The crankcase 28 can be thus supported on the first engine hangers 32, 32 efficiently and in a manner that ensures enhanced rigidity.

The crankcase 28 rotatably supports a crankshaft 34 that is connected via a connecting rod to a piston that slides in the cylinder block 29 of the engine 5. Connected to the rear portion of the crankcase 28 is a rear case 40 for accommodating a part of the transmission unit 6 that constitutes a power transmission mechanism between the crankcase 34 and an output shaft 57. More specifically, the rear case 40 accommodates, as the transmission unit 6, a belt-type continuously variable transmission for continuously varying the rotary power of the crankshaft 34 before transmitting it to the rear wheel 7 side, and a gear train for decelerating the rotary power of a transmission shaft 54 of this continuously variable transmission before transmitting it to the output shaft 57 journalled to the rear side of the continuously variable transmission.

The transmission unit 6 includes a drive pulley 51 provided to the crankshaft 34, a driven pulley 52 provided to the transmission shaft 54 rotatably supported in position and having an axis parallel to the crankshaft 34, and an endless belt 53 wound around the drive pulley 51 and the driven pulley 52. In the transmission unit 6, the drive pulley 51 changes the winding radius of the belt 53 through the actuation of an electric motor (not shown) or the like. In response to the change in the winding radius of the drive pulley 51, the winding radius of the driven pulley 52 is changed to the side opposite to the drive pulley 51, thereby changing the transmission ratio. Further, a centrifugal clutch mechanism is interposed between the drive pulley 52 and the transmission shaft 54.

A swing arm 60, to which the rear wheel 7 is journalled, is supported on the rear end of the rear case 40 so as to be vertically swingable, and a drive chain 64 is wound around a drive sprocket 62 provided to the output shaft 57 and a driven sprocket 63 provided to the rear wheel 7. The power of the engine 5 is thus transmitted to the rear wheel 7.
A cushioning bracket 60c is provided to the front portion of the swing arm 60. A rear cushion 72 having a longitudinally extending axis is provided to the cushioning bracket 60c, and to a bracket 71b provided to a cross pipe 71 that is suspended between the main pipes 20, 20. Further, a main stand 68 is pivotably supported on a lower rear-side portion of the rear case 40.

The front end of an exhaust pipe 95 is connected to a side surface in the rear portion of the cylinder head 30 of the engine 5. The exhaust pipe 95 extends downward by the side of the rear case 40 of the engine 5. After extending to a position below the swing arm 60, the exhaust pipe 95 is bent upward so as to extend upwardly rearward along the right side of the rear wheel 7. An exhaust muffler 97 is connected to the rear end of the exhaust pipe 95.
Further, a throttle body 74 is connected to the front surface of the cylinder head 30 of the engine 5. An air cleaner 76 is coupled to the front end of the throttle body 74.

The air cleaner 76 is disposed between the down pipes 18, 18 and between the lower pipes 19, 19. As shown in Fig. 2, the air cleaner 76 includes a cleaner case 148, and a cleaner element 149 that divides the inside of the cleaner case 148 into a non-purification chamber 152 at the front and a purification chamber 153 at the rear. An outside-air introduction pipe 154 for introducing the outside air from the lateral side of the air cleaner 76 is disposed in the non-purification chamber 152. An intake pipe 155 for feeding the air in the purification chamber 153 to the throttle body 74 is disposed in the purification chamber 153.
Further, a pair of left and right brackets 19f, 19g, which extend forward while being vertically spaced apart from each other, are provided in lower portions of the lower pipes 19, 19. Left and right mounting arm portions 91a, 91b, which extend rearward from both side portions a radiator 91 while being vertically spaced apart from each other, are connected to the brackets 19f, 19g via mount gums 8, 8 by means of bolts 41. Accordingly, the radiator 91 is mounted at a position below the front portion of the air cleaner 76 and in front of the engine 5. Cooling water of the engine 5 is cooled by means of the radiator 91.

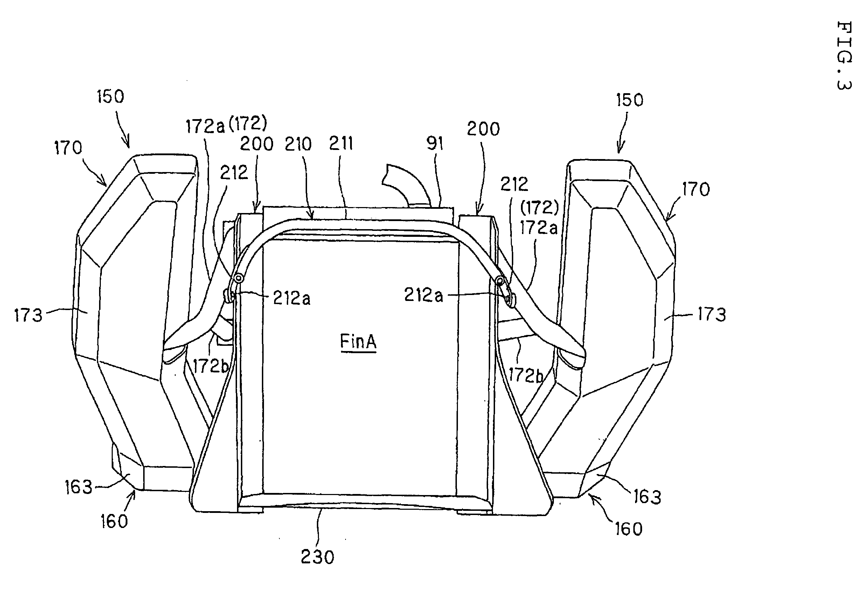

As shown in Figs. 2 and 3, a pair of left and right radiator shrouds (radiator deflectors) 200, 200 are attached to both side surfaces of the radiator 91. The radiator shrouds 200, 200 have a substantially trapezoidal shape as seen in side view. The radiator shrouds 200, 200 are arranged in close proximity to the lower pipe 19b such that their rear-end surfaces extend downwardly rearward along the lower pipe 19b. The radiator shrouds 200, 200 extend forward beyond the radiator 91 and deflect the running wind from the front of the body toward the radiator 91. Further, the radiator shrouds 200, 200 has a notch 200k for preventing interference between the mounting arm portion 91a extending rearward from the radiator 91, and the bracket 19f extending forward from the lower pipe 19.
Further, a reinforcing frame 210, which connects between stay pipes (frame members) 172a, 172a connected to the body frame 2, is arranged in front of an upper portion of each of the radiator shrouds 200, 200.

The reinforcing frame 210 has a pipe member 211 that is bent in a substantially U-shaped configuration as seen in plan view, and a pair of left and right brackets 212, 212 joined to both ends of the pipe member 211 by welding. The bracket 212 has openings 212a, 212b that are formed so as to be longitudinally spaced apart from each other. A bolt 220 is inserted form inside through the opening 212a on the front side to be fastened to the stay pipe 172a. A bolt 221 is inserted from inside through the opening 212b on the rear side, and the bolt 221 is passed through an opening (not shown) of the radiator shroud 200 to be fastened to the stay pipe 172a.
In this way, by fixing the left and right radiator shrouds 200, 200 to the stay pipes 172a, 172a by fastening together with the reinforcing frame 210, the left and right radiator shrouds 200, 200 can be reinforced in strength. In addition, due to the commonality of mounting portions achieved by fastening of these components together, a reduction can be achieved in the number of the mounting portions.

As shown in Fig. 3, a horizontal baffle plate 230 extending substantially horizontally in the width direction of the body is wrapped around a lower portion of each of the left and right radiator shrouds 200, 200. The horizontal baffle plate 230 can reinforce the strength of the lower portions of the radiator shrouds 200, 200 and guide the running wind flowing below the body from the front toward the radiator 91, thereby making it possible to enhance the cooling efficiency of the radiator 91. The horizontal baffle plate 230 used may be independent as a horizontal baffle plate, or a like component may be extended from the radiator 91. In this case, as shown in Fig. 3, it is assumed that a fin arrangement area FinA of the radiator 91, in which cooling fins for effecting heat exchange between cooling water and air are arranged, lies within the gap surrounded by the radiator shrouds 200, 200, the reinforcing frame 210, and the horizontal baffle plate 230. This allows the running wind flowing in toward the fin arrangement area FinA to be effectively taken in by the radiator shrouds 200, 200, the reinforcing frame 210, and the horizontal baffle plate 230.

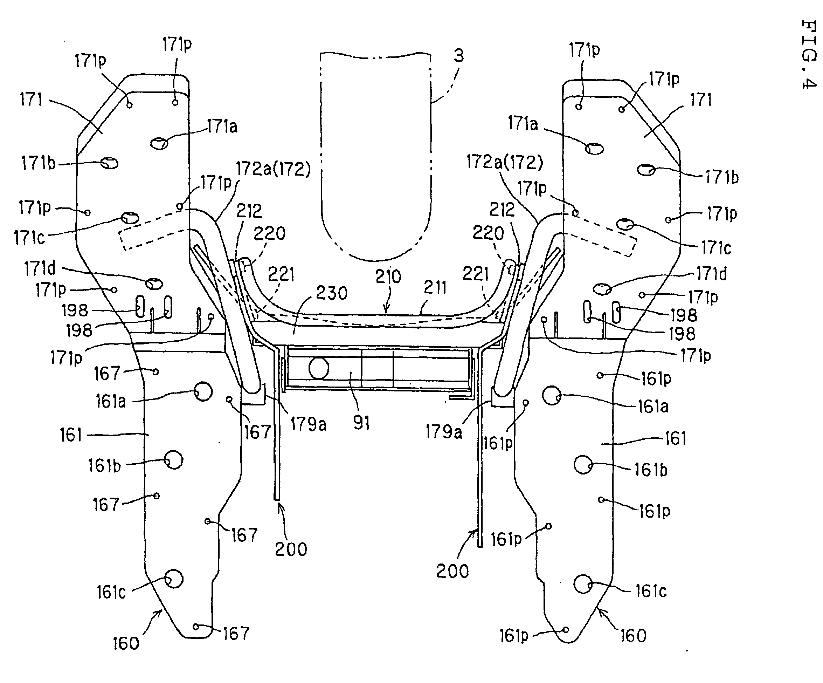

When the radiator 91 is arranged in rear of the front wheel 3, there may be cases where the running wind entering from the front of the vehicle is blocked by the front wheel 3 and thus the amount of wind passing through the radiator 91 decreases. In view of this, according to this embodiment, as shown in Fig. 4, the radiator shroud 200 is shaped so as to diverge more outward with respect to the width direction of the vehicle at the front portion than at the rear portion as seen in plan view. The running wind that is to pass through the outer side of the radiator 91 with respect to the vehicle width direction is thus also guided to the radiator 91 by the radiator shrouds 200, 200, thereby enhancing the cooling efficiency of the radiator 91.
Further, the rear portions of both the radiator shrouds 200, 200 are in proximity to the lower pipe 19b, and the front-end surfaces thereof are inclined downwardly forward so that the lower ends of their front portions are positioned on the left and right of the front wheel 3. Accordingly, the radiator shrouds 200, 200 can block scattering of water or mud thrown up by the front wheel 3 to the rear of the radiator shrouds 200, 200 and to the outer side of the vehicle, thereby making it possible to prevent the thrown up water or mud from splashing on the rider and the like.

As shown in Fig. 1, a fuel tank 90 is disposed between the down pipes 18, 18 located above the front portion of the body frame 2. The fuel tank 90 is thus placed above the air cleaner 76. Further, the head pipe 17 at the front end of the body frame 2 is provided with a lock mechanism 101 capable of switching the steering handlebar 16 between a locked state and an unlocked state. Further, a stay 111 extending diagonally upwardly forward of the head pipe 17 is fixed to the head pipe 17. A meter 112 arranged in front of the center portion of the steering handlebar 16, and a key cylinder lock 102 for effecting switching or the like of the lock mechanism 101 are fixed to the stay 111. Further, a forwardly extending lamp stay 114 is fixed to an upper portion of the stay 111, and a head lamp 113 is supported on the lamp stay 114.

The motorcycle 1 includes a body cover 125 made of synthetic resin that covers the vehicle substantially entirely, a front fender 140 made of synthetic resin that covers a portion of the front wheel 3 above its front portion to a portion in rear thereof, and a rear fender 141 made of synthetic resin that covers a portion above the rear portion of the rear wheel 7. The body cover 125 includes a front cover 126 to which the head lamp 113 is attached and which covers the front portion of the head pipe 17, a center cover 127 which covers the head pipe 17 and the fuel tank 90 from the rear and extends continuous to the front cover 126, a floor tunnel portion 130 extending continuous to the rear portion of the center cover 127, and a rear cover 132 which extends continuous to the rear portion of the floor tunnel portion 130 and covers both the left and right sides of the rear portion of the body frame 2.

A tandem seat 133, on which the rider and the pillion passenger seated in rear of the rider ride, is provided on the rear cover 132.
In this embodiment, the seating position of the rider seated on the seat 133 is positioned lower than the seating position of the pillion passenger so as to be closer to the engine 5 and body frame 2 side, so the seat height is set somewhat low. A pair of left and right footboard units 150, 150 are provided at positions to which the rider seated on the seat 133 stretches his/her feet forward.

As shown in Figs. 1 and 2, the footboard units 150, 150 are respectively arranged at left and right positions in front of and diagonally below the seat 133. The footboard units 150, 150 include step floor portions 160, 160, which extend from the front end of the engine 5 to a position in close proximity to the front wheel 3 so as to be substantially in parallel to the ground as seen in side view, and footrest portions 170, 170 extending from the front end portions of the step floor portions 160, 160 to portions beside the front forks 15, 15 while being inclined upwardly forward.
As shown in Fig. 2, the step floor portion 160 includes a first footboard 161, a first support stay 162 for supporting the first footboard 161, a first cover 163 that covers the first support stay 162 from below and is connected to the first footboard 161, and a non-slip sheet 164 made of rubber or synthetic resin that is laid on the upper surface of the first footboard 161.
As shown in Fig. 2, the first support stay 162 has a stay portion 162a that projects from the first cover 163 toward the inner side of the body so as to extend upwardly forward. The front end portion of the stay portion 162a is connected via a bolt 42 to a bracket 19c provided to the lower-side lower pipe 19b, whereby the step floor potion 160 is connected to the lower-side lower pipe 19b via the first support stay 162.

As shown in Figs. 3 and 4, the footrest portions 170, 170 are shaped such that they first extend from the front ends of the step floor portions 160, 160 diagonally outward with respect to the width direction of the body and then extend forward. Accordingly, the footboard units 150, 150 are shaped such that the footrest portions 170, 170 constituting the front portions thereof are diverged outward as compared with the step floor portion 160 constituting the rear portion thereof. The footrest portion 170 includes a second footboard 171, a second support stay 172 for supporting the second footboard 171, a second cover 173 that covers the second support stay 172 from below and is connected to the second footboard 171, a non-slip sheet 174 made of rubber or synthetic resin that is laid on the upper surface of the second footboard 171, and a fixing member 175 for fixing the heel of a foot of the rider in position.

As shown in Figs. 2, 3, and 4, the second support stay 172 has two stay pipes 172a, 172b that are bent after projecting to the inner side of the body from the second cover 173 and then extend rearward. The rear end portions of the stay pipes 172a, 172b are respectively connected via bolts 43, 44 to a bracket 19d provided in a lower portion of the upper-side lower pipe 19a and a bracket 19e extending forward from the lower-side lower pipe 19b. The footrest portion 170 is thus connected to the upper-side lower pipe 19a and the lower-side lower pipe 19b via the second stay 172.
In this embodiment, as shown in Fig. 2, of the above-mentioned stay pipes 172a, 172b, the stay pipe 172a extends substantially perpendicularly toward the upper-side lower pipe 19a to be connected to the bracket 19d of the upper-side lower pipe 19a, whereas the stay pipe 172b extends substantially perpendicularly toward the lower-side lower pipe 19b to be connected to the bracket 19e of the lower-side lower pipe 19b, thereby making it possible to enhance the strength of the connection between the footrest portion 170 and the lower pipe 19.

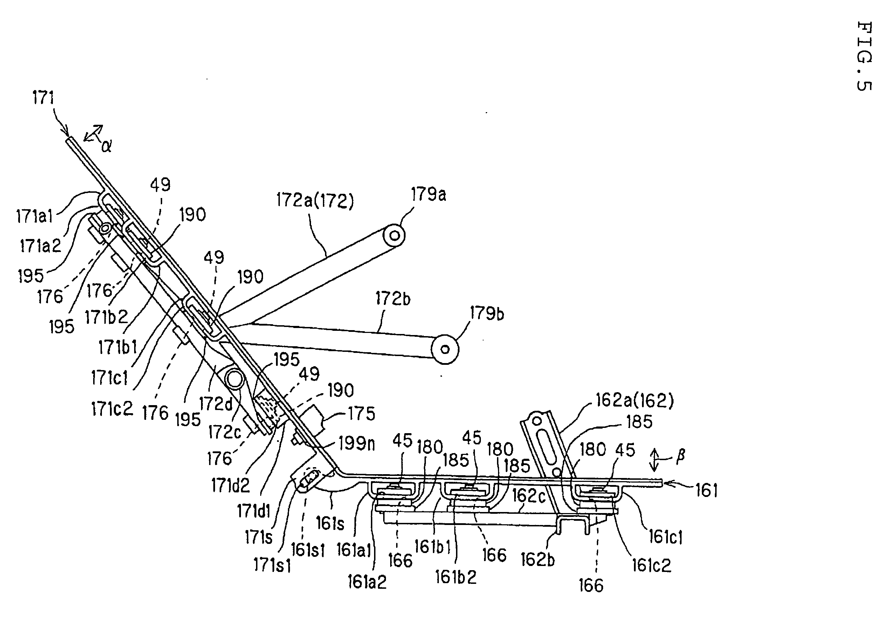

As shown in Fig. 4, the upper surface of the first footboard 161 is formed as a flat surface. A plurality of openings 161a, 161b, 161c are formed in this flat surface so as to be spaced apart from each other. Further, as shown in Fig. 5, fastening portions 161a1, 161b1, 161c1, which are substantially U-shaped as seen in longitudinal cross section, are formed below the openings 161a, 161b, 161c, respectively. Openings 166, 166, 166, which are located substantially coaxially with the openings 161a, 161b, 161c, are formed in planar portions 161a2, 161b2, 161c2 of the fastening portions 161a1, 161b1, 161c1.
Further, in the first footboard 161, a plurality of openings 161p, through which bolts for connecting the first cover 163 are passed, are formed so as to be spaced apart from each other.

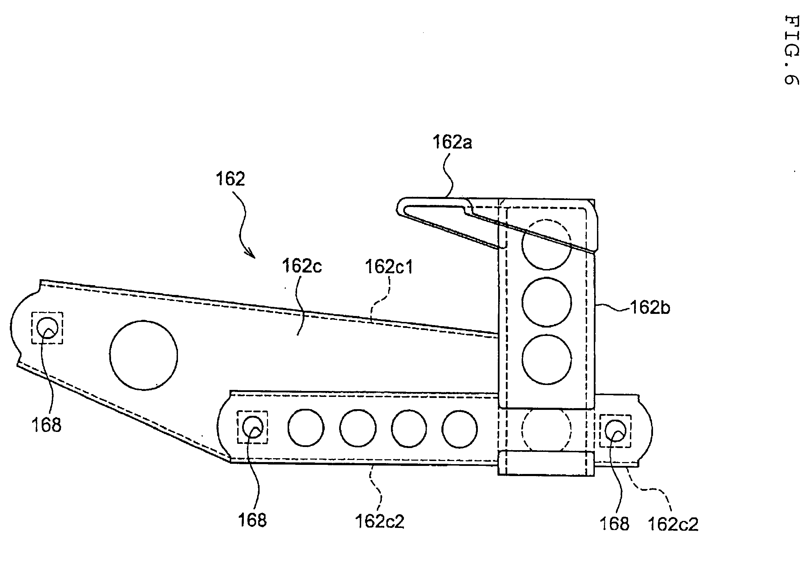

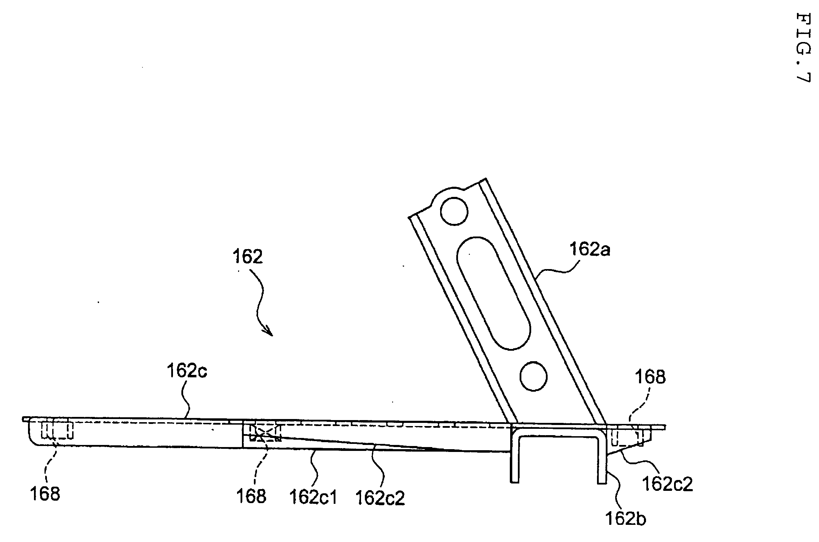

Fig. 6 is a plan view of the first support stay 162, and Fig. 7 is a side view of the same. Figs. 6 and 7 show the first support stay 162 on the left side. The first support stays 162, 162 on the left and right sides are formed so as to be laterally symmetrical.
The first support stay 162 includes the stay portion 162a connected to the body frame 2, a support member 162b having a substantially U-shaped cross section and extending from the proximal end portion of the stay portion 162a in a direction at right angles to the extending direction of the stay portion 162a (corresponding to the horizontal direction), and a first footboard support portion 162c that is joined to the support member 162b by welding and supports the first footboard 161.

The upper surface of the first footboard support portion 162c is formed as a flat surface. Bolt-fastening hole portions 168, 168, 168, which are positioned substantially coaxially with the openings 161a, 161b, 161c of the first footboard 161 and to which bolts 45 (see Fig. 5) are fastened upon placing the first footboard 161 on this upper surface, are formed in the upper surface. Bent portions 162c1, 162c2 that are bent downward are provided on both sides of the first footboard support portion 162c. The bent portions 162c1, 162c2 allow a large joining surface area to be secured with respect to the support member 152b. In addition, by making the bent portions 162c1, 162c2 also serve as reinforcing ribs, the strength of the first footboard support portion 162c is enhanced.
Further, the first footboard support 162c is subjected to lightening processing by forming a plurality of holes in the area other than the bolt-fastening hole portions 168, 168, 168, thereby achieving a reduction in overall weight. It should be noted that the stay portion 162a and the support member 162b are also subjected to lightening processing to achieve a reduction in weight.

As shown in Fig. 4, in substantially the same manner as in the first footboard 161, the upper surface of the second footboard 171 is formed as a flat surface. A plurality of openings 171a, 171b, 171c, 171d are formed in this flat surface so as to be spaced apart from each other. Further, as shown in Fig. 5, fastening portions 171a1, 171b1, 171c1, 171d1, which are substantially U-shaped as seen in longitudinal cross section, are formed below the openings 171a, 171b, 171c, 171d, respectively. In planar surfaces 171a2, 171b2, 171c2, 171d2 of the fastening portions 171a1, 171b1, 171c1, 171d1, there are formed openings 176, 176, 176, 176 that are positioned substantially coaxially with the openings 171a, 171b, 171c, 171d.
Further, in the second footboard 171, a plurality of openings 171p, through which bolts for connecting the second cover 173 are passed, are formed so as to be spaced apart from each other.

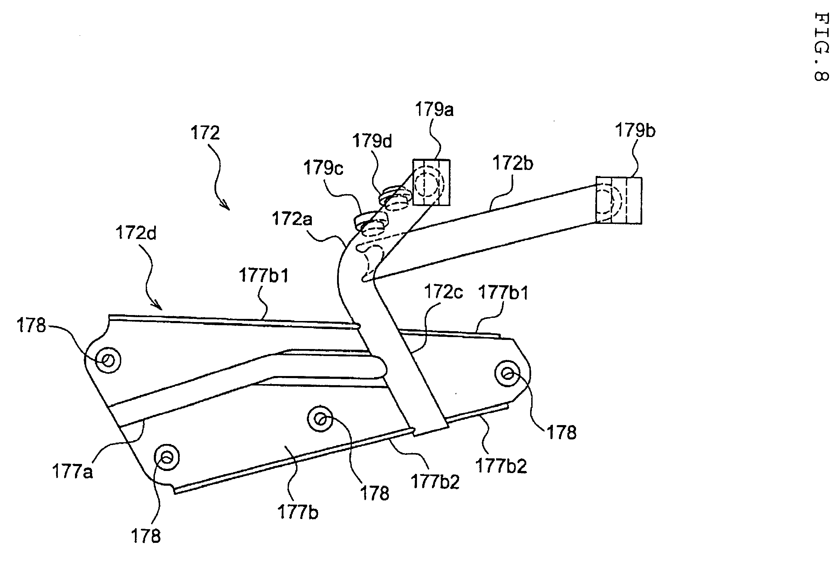

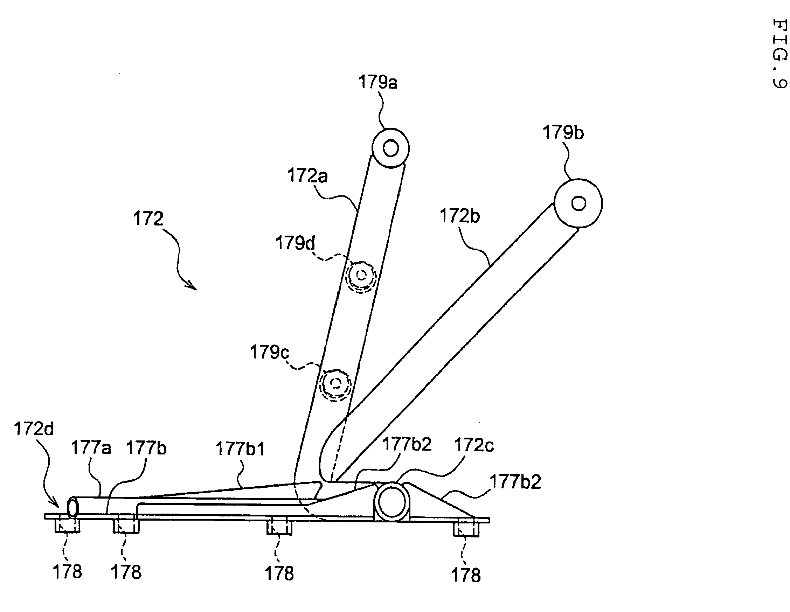

Fig. 8 is a plan view of the second support stay 172, and Fig. 9 is a side view of the same. Figs. 8 and 9 show the second support stay 172 on the left side. The second support stays 172, 172 on the left and right sides are also formed so as to be laterally symmetrical.
The second support stay 172 includes the stay pipes 172a, 172b connected to the body frame 2, a support member 172c formed by bending the stay pipe 172a in a substantially right-angle direction at a midway portion thereof, and a second footboard support portion 172d that is joined to the support member 172c by welding and supports the second footboard 171.

The second footboard support portion 172d has a pipe member 177a that is joined to the support member 172c by welding and extends forward, and a flat portion 177b that is supported on the pipe member 177a and the support member 172c. The entire flat portion 177b can be securely supported by the pipe member 177a and the support member 172c, thus allowing a corresponding decrease in the thickness of the flat portion 177b to achieve a reduction in overall weight.
Further, bent portions 177b1, 177b2 that are bent upward are provided on both sides of the flat portion 177b. The bent portions 177b1, 177b2 allow a large joining surface area to be secured with respect to the support member 172c. In addition, the bent portions 177b1, 177b2 serve as reinforcing ribs, thus enhancing the strength of the flat portion 177b.

The flat portion 177b, whose upper surface is formed as a flat surface, is formed in a sector-like shape whose width gradually increases toward the front side. Bolt-fastening hole portions 178, 178, 178, 178, which are positioned substantially coaxially with the openings 171a, 171b, 171c, 171d of the second footboard 171 and to which bolts 49 (see Fig. 5) are fastened upon placing the second footboard 171 on this upper surface, are formed in the upper surface.
Further, cylindrical members 179a, 179b allowing insertion of the bolts 43, 44 (see Fig. 2) are joined to the ends of the stay pipes 172a, 172b by welding. Further, in the stay pipe 172a, bolt-fastening hole portions 179c, 179d, to which bolts 220, 221 (see Fig. 4) can be freely fastened, are provided while being spaced apart from each other along the direction of the axis of the stay pipe 172a.

Next, the connecting structure for the step floor portion 160, and the connecting structure for the footrest portion 170 will be described.
In this embodiment, in the step floor portion 160, as shown in Fig. 5, rubber bushes (elastic members) 180, 180, 180 are respectively locked to openings 166, 166, 166 formed in the fastening portions 161a1, 161b1, 161c1 of the first footboard 161, and substantially plate-like height adjusting members 185, 185, 185 are respectively arranged between the rubber bushes 180, 180, 180 and the first footboard support portion 162c of the first support stay 162. By fastening the bolts 45, 45, 45 from the first footboard 161 side respectively to the bolt-fastening hole portions 168, 168, 168 of the first footboard support portion 162c, the fastening portions 161a1, 161b1, 161c1 of the first footboard 161 are connected to the first footboard support portion 162c, that is, the first footboard 161 is connected to the first footboard support portion 162c.

Further, as for the footrest portion 170 as well, in substantially the same manner as in the step floor portion 160, as shown in Fig. 5, rubber bushes (elastic members) 190, 190, 190, 190 are respectively locked to openings 176, 176, 176, 176 formed in the fastening portions 171a1, 171b1, 171c1, 171d1 of the second footboard 171, and substantially plate-like height adjusting members 195, 195, 195, 195 are respectively arranged between the rubber bushes 190, 190, 190, 190 and the second footboard support portion 172d of the second support stay 172. By fastening the bolts 49, 49, 49 from the second footboard 171 side respectively to the bolt-fastening hole portions 178, 178, 178, 178 of the second footboard support portion 172d, the fastening portions 171a1, 171b1, 171c1, 171d1 of the second footboard 171 are connected to the bolt-fastening hole portions 178, 178, 178, 178 of the second footboard support portion 172d, that is, the second footboard 171 is connected to the second footboard support portion 172d.

As described above, in this embodiment, the connecting structure for the step floor 160 and the connecting structure for the footrest portion 170 are common. In the following, the structure for connecting the fastening portion 171d1 of the second footboard 171 to the second footboard support portion 172d will be described in detail as an example.

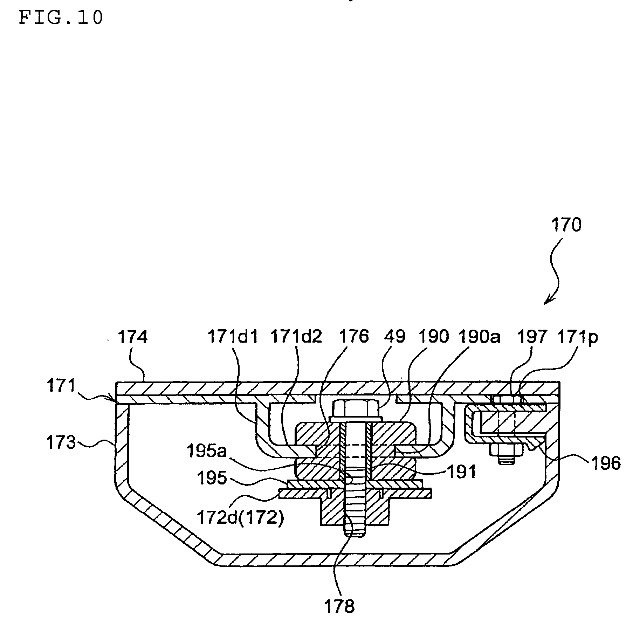

Fig. 10 is a sectional view showing the fastening portion 171d1 of the footrest portion 170 together with the construction in the vicinity thereof. The rubber bush 190 is formed of an elastic material such as rubber having vibration-absorbing property, and includes a central groove 190a formed in the outer periphery of its cylindrical configuration. The inner diameter of the central groove 190a is set to be substantially the same as that of the opening 176. Accordingly, upon inserting the rubber bush 190 into the opening 176 of the fastening portion 171d1, the central groove 190a is locked to the edge of the opening 176.
Further, the height adjusting member 195 is a plate-like member formed at a preset thickness. A hole portion 195a through which the bolt 49 passes is formed at the center of the height adjusting member 195. Further, as shown in Fig. 10, the height adjusting member 195 is arranged between the rubber bush 190 and the second footboard support portion 172d of the second support stay 172, and in this state, the bolt 49 is inserted through a cylindrical collar 191 and the adjusting member 195, which are arranged in the center hole of the rubber bush 190, to be fastened to the bolt-fastening hole portion 178 of the second footboard support portion 172d. Accordingly, the height of the second footboard 171 relative to the second footboard support portion 172d can be changed in accordance with the thickness of the adjusting member 195.

Further, as shown in Fig. 10, a clip nut 196 made of metal is arranged in the second cover 173. The second cover 173 and the second footboard 171 are connected to each other by fastening a bolt 197, which is passed through the opening 171p of the second footboard 171, to the clip nut 196. As described above, the second cover 173 is connected to only the second footboard 171 and is not connected to the second footboard support portion 172d and the second support stay 172. Accordingly, even when the height adjusting member 195 is changed to an adjusting member of a different thickness and the height of the second footboard 171 thus changes, the second cover 173 can move in accordance with the position of the second footboard 171, thereby avoiding a situation where the outward appearance of the footboard portion 170 changes.
A non-slip sheet 174 is laid on the upper surface of the second footboard 171. The non-slip sheet 174 prevents the feet of the rider from slipping, and can also serve as a screen to hide the opening 171d of the second footboard 171.

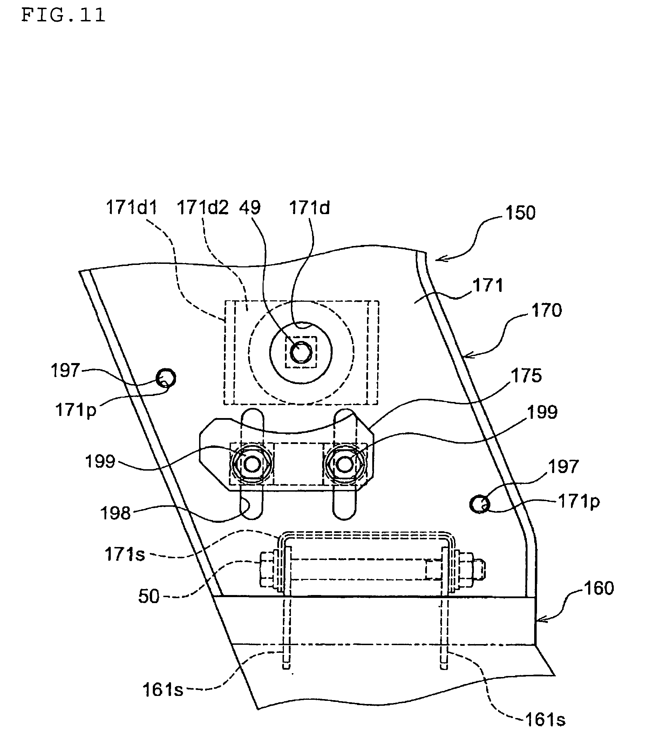

Further, in this embodiment, as shown in Figs. 5 and 11, a connecting plate 171s having a substantially U-shaped cross section in plan view is provided to the rear end portion of the second footboard 171 so as to project downward from the back side thereof. In the connecting plate 171s, there are formed a pair of left and right elongated hole portions 171s1, 171s1 located on an axis extending in the width direction of the second footboard 171.
Further, connected plates 161s, 161s are provided at the front end of the first footboard 161 so as to project forward from the back side thereof to enter the inside of the connecting plate 171s of the second footboard 171. In the connected plates 161s, 161s, there are formed a pair of left and right circular openings 161s1, 161s1 (see Fig. 5) located on an axis extending in the width direction of the second footboard 171.
As shown in Fig. 5, when the elongated hole portions 171s1, 171s1 of the connecting plate 171s of the second footboard 171, and the openings 161s1, 161s1 of the connected plates 161s, 161s of the first footboard 161 are communicated with each other, the rear-end surface of the second footboard 171 and the front-end surface of the first footboard 161 are brought into intimate contact with each other, thereby making it possible to connect these components together with ease without leaving a gap.

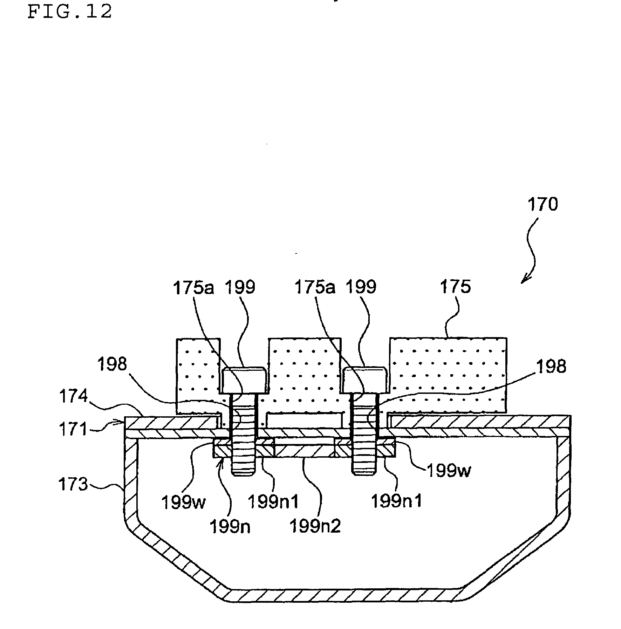

Further, in this embodiment, as shown in Figs. 11 and 12, a pair of longitudinally extending left and right elongated hole portions 198, 198 are provided on the rear side of the upper surface of the second footboard 171. The fixing member 175, in which bolt insertion holes 175a, 175a are formed at a spacing corresponding to the spacing between the elongated hole portions 198, 198, are placed above the elongated hole portions 198, 198. Bolts 199, 199 are passed from above the fixing member 175 to be fastened to a nut connecting member 199n via a washer w disposed inside each of the elongated hole portions 198, 198. Accordingly, the fixing member 175 can be moved longitudinally by loosening the bolts 199, 199, thereby allowing the position of the fixing member 175 for fixing the heel of a foot in position to be adjusted in conformity to the body shape (the leg length, foot size, and preferences) of an occupant.
Further, the above-mentioned nut connecting member 199n is a member that connects two nuts 199n1, 199n1 by a connecting member 199n2 so that the spacing therebetween coincides with the spacing between the elongated hole portions 198, 198. This construction allows the two nuts 199n1, 199n1 to be handled as a single part, thereby facilitating the position adjustment of the fixing member 175.

As described above, according to this embodiment, in the footrest portion 170, the height adjusting members 195, 195, 195, 195 are arranged between the second footboard supporting portion 172d of the second support stay 172, and the second footboard 171. Accordingly, as indicated by the arrow α in Fig. 5, the height of the second board 171 relative to the second footboard support portion 172d can be adjusted in accordance with the thickness of the height adjusting member 195. In this case, since the second footboard 171 is arranged diagonally, the longitudinal position of the second footboard 171 can be adjusted.

Further, in the step floor portion 160, the height adjusting members 185, 185, 185 are arranged between the first footboard support portion 162c of the first support stay 162, and the first footboard 161. Accordingly, as indicated by the arrow β in Fig. 5, the height of the first board 161 relative to the first footboard support portion 162c can be adjusted in accordance with the thickness of the height adjusting member 185. In this case, since the first footboard 161 is arranged horizontally, the vertical position of the first footboard 161 can be adjusted.
Accordingly, the vertical position of the first footboard 161 and the longitudinal position of the second footboard 171 can be individually adjusted in conformity to the body shape (the leg length, foot size, and preferences) of an occupant, thus allowing more comfortable placement of the feet of the occupant.

In this way, according to this embodiment, the positioning of the first footboard 161 and second footboard 171 is effected by the height adjusting members 185 and 195. Accordingly, by aligning the height adjusting members 185 and 195 on the left and right sides, the positions of the first footboard 161 and second footboard 171 on the left and right sides can be easily aligned. Further, since the positions of the first footboard 161 and second footboard 171 are not displaced even when the bolts 45, 49 loosen, the interval of maintenance such as retightening of the bolts can be made longer, thereby facilitating maintenance.

Furthermore, since the first footboard 161 is supported on the first footboard support portion 162c of the first support stay 162 via the rubber bush (elastic member) 180, and the second footboard 171 is supported on the second footboard support portion 172d of the second support stay 172 via the rubber bush (elastic member) 190, it is possible to prevent vibrations transmitted from the road surface during driving, or engine vibrations from being transmitted to the first footboard 161 and the second footboard 171, thus providing improved comfort for the occupant.

In this embodiment, since the bolt 50 is fastened by communicating the elongated hole portion 171s1 of the connecting plate 171s provided to the second footboard 171, and the opening 161s1 of each of the connected plates 161s, 161s provided to the first footboard 161 with each other, the first footboard 161 and the second footboard 171 can be reliably connected to each other. Further, since the elongated hole portion 171s1 of the connecting plate 171s is formed in the shape of a hole extending in a direction that coincides with the thickness direction of the height adjusting member 185, even when the thickness of the height adjusting member 185 is changed to thereby change the longitudinal position of the second footboard 171, the elongated hole portion 171s1 and the opening 161s1 are communicated with each other, thereby making it possible to reliably connect the first footboard 161 and the second footboard 171 to each other.

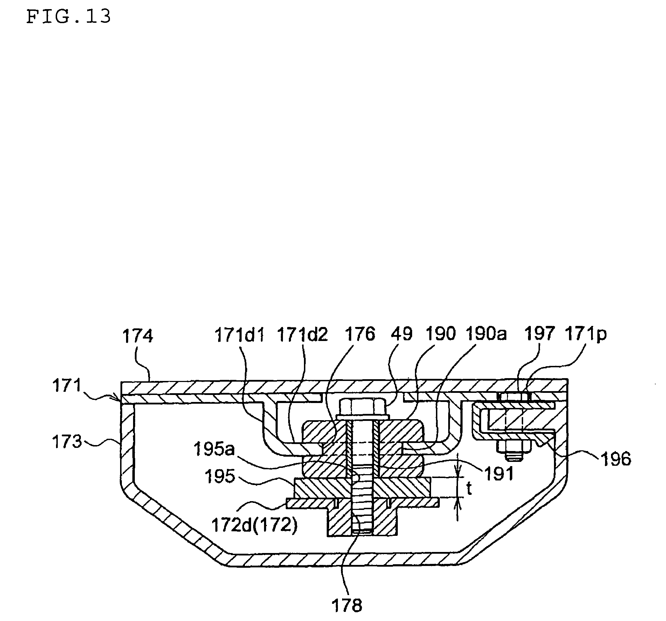

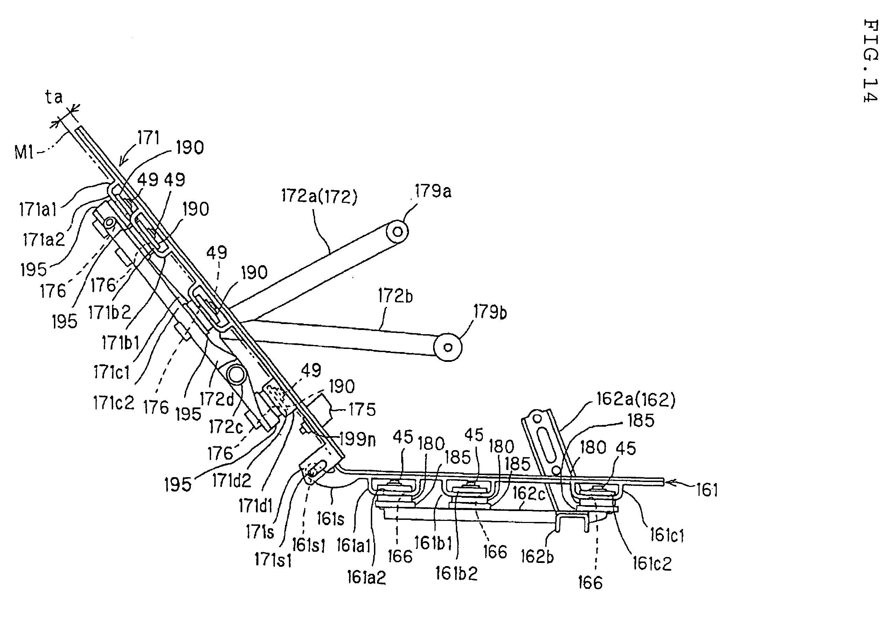

Fig. 13 shows a modification of the height adjusting member 195, and Fig. 14 is a side view of the footboard unit 150 in this case. In this modification, the thickness t of the height adjusting member 195 is changed to a value larger than that in the above-mentioned embodiment by a value ta.
According to this construction, as shown in Fig. 14, the upper surface position of the second footboard 171 can be made higher by the value ta than the upper surface position M1 of the second footboard 171 prior to the modification. In this case, since the position of the second footboard 171 becomes higher relative to the second footboard portion 172d, the second footboard 171 moves toward the rear of the body, thereby making it possible to bring the second footboard 171 closer to the rider side. Accordingly, by changing the thickness t of the height adjusting member 195, the longitudinal position of the second footboard 171 can be easily adjusted.

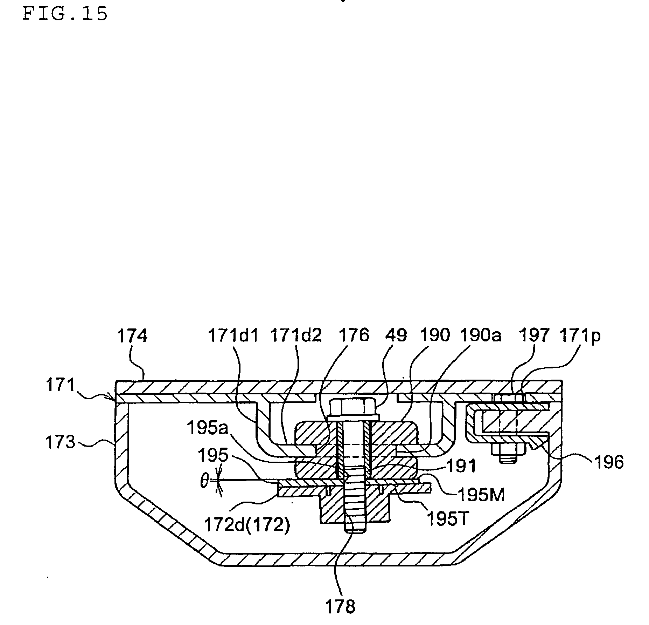

Fig. 15 shows another modification of the height adjusting member 195. In this modification, the height adjusting member 195 has an inclined surface 195M whose thickness changes. The inclined surface 195M is formed as a surface that is inclined with respect to a bottom surface 195T of the height adjusting member 195.
According to this construction, as shown in Fig. 15, by arranging the height adjusting member 195 on the second footboard support portion 172d such that its inclined surface 195M is inclined by an angle θ toward the inner side of the body, the second footboard 171 can be inclined by the angle θ toward the inner side of the body. It is needless to mention that if the height adjusting member 195 is arranged such that its inclined surface 195M is inclined toward the outer side of the body, the second footboard 171 can be inclined toward the outer side of the body.

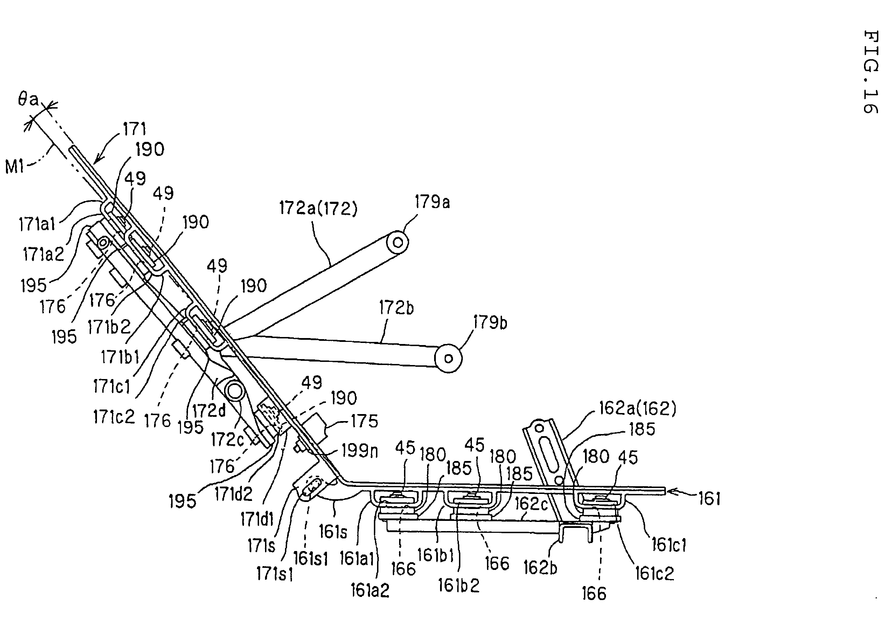

Further, in an embodiment shown in Fig. 16, the height adjusting member 195 is arranged such that its inclined surface 195M is inclined upwardly forward by an angle θa with respect to the second footboard support portion 172d. In this case, the second footboard 171 can be inclined upwardly forward by the angle θa with respect to the upper surface position M1 of the second footboard 171 prior to the modification. In this case, in accordance with the inclination of the second footboard 171, the heights of the plurality of height adjusting members 195 are set in accordance with the gap between the second footboard 171 and the second footboard support portion 172d, thereby allowing the second footboard 171 to be securely supported on the second footboard support portion 172d via the plurality of height adjusting members 195.
In this way, due to the provision of the inclined surface 195M to the height adjusting member 195, the second footboard 171 can be easily inclined toward the inner side or outer side of the body, and also the inclination angle of the second footboard 171 toward the front and the rear of the body can be easily adjusted.

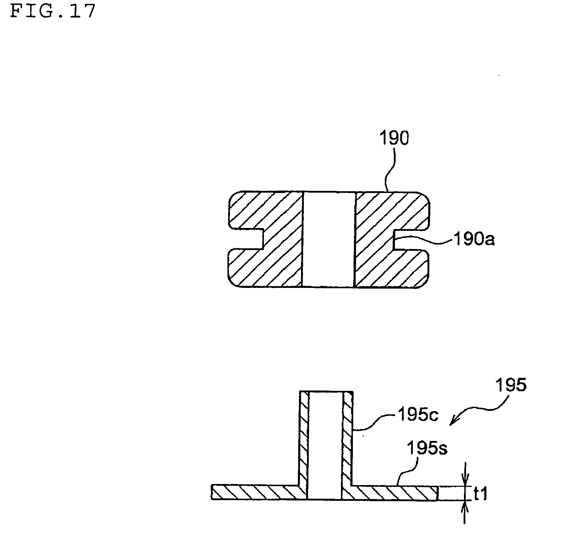

Fig. 17 shows another modification of the height adjusting member 195. In this modification, the height adjusting member 195 integrally includes the collar 191 inserted through the center hole of the rubber bush 190. More specifically, the height adjusting member 195 includes a spacer portion 195s formed by integral molding and arranged between the rubber bush 190 and the second footboard support portion 172d, and a collar portion 195c corresponding to the above-mentioned collar 191 (see Fig. 10). The height adjusting member 195 as described above allows the longitudinal position and inclination of the second footboard 171 to be adjusted in accordance with the configuration (the setting of the thickness t1, the adoption of an inclined configuration, and the like) of the spacer portion 195s. According to this construction, the collar 191 is integrated with the height adjusting member 195, thereby achieving reduced number of parts and enhanced ease of disassembly and assembly.

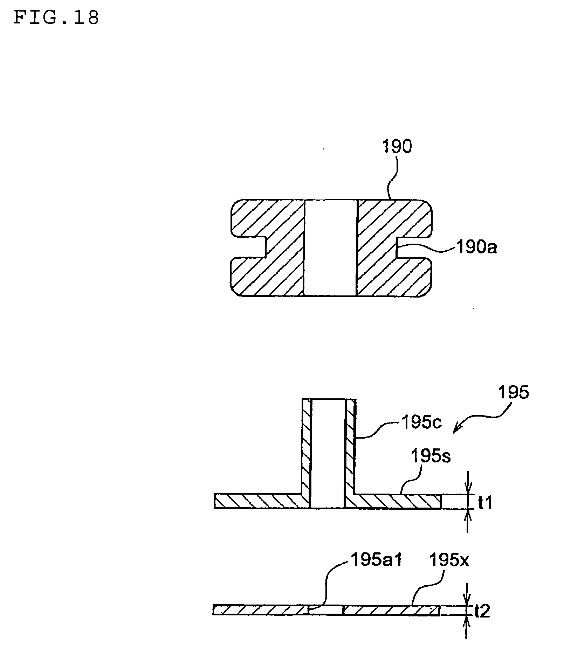

In the case where the height adjusting member (referred to as the first height adjusting member) 195 integrated with the above-mentioned collar 191 is used, as shown in Fig. 18, another height adjusting member 195x (hereinafter, referred to as the second height adjusting member) may be additionally used. Employed as the second height adjusting member 195x is a substantially flat-shaped spacer provided with a hole portion 195a1 through which the bolt 49 (see Fig. 10) passes. The second height adjusting member 195x is interposed between the first height adjusting member 195 and the second footboard support portion 172d. The second height adjusting member 195x also allows the longitudinal position and inclination of the second footboard 171 to be adjusted through the setting of the thickness t2, the adoption of an inclined configuration, or the like. According to this construction, the addition of the second height adjusting member 195x makes it readily possible to perform post adjustment of the position of the second footboard 171. Further, the position of the second footboard 171 can be easily adjusted in two stages through a simple operation of attaching or detaching the second height adjusting member 195x.

While the present invention has been described in the foregoing on the basis of an embodiment, the present invention is not limited to this embodiment but various design modifications may be made to the present invention. For example, while in the above-mentioned embodiment the description is directed to the case where the step floor portion 160 and footrest portion 170 of the footboard unit 150 are made freely adjustable, this should not be construed restrictively. Only one of the step floor portion 160 and footrest portion 170 may be made freely adjustable.
Further, while in the above-mentioned embodiment the description is directed to the case where the present invention is applied to the footboard unit 150 having the step floor portion 160 and the footrest portion 170, this should not be construed restrictively. The present invention is also applicable to a footboard structure having only either one of these components.

Further, while in the above-mentioned embodiment the description is directed to the case where the plurality of height adjusting members 185 and 195 are used, this should not be construed restrictively. It is also possible to use a height adjusting member formed by integrally connecting the plurality of height adjusting members 185, or to use a height adjusting member formed by integrally connecting the plurality of height adjusting members 195.
Further, while in the above-mentioned embodiment the description is directed to the case where the present invention is applied to the footboard structure for a motorcycle, this should not be construed restrictively. The present invention is also applicable to the footboard structure for saddle-ride type vehicles including three- and four-wheeled vehicles that are classified as the ATV (All Terrain Vehicle).
- 1 ...: Motorcycle
- 2...: Body frame
- 3...: Front wheel
- 4...: Power unit
- 5...: Engine (multi-cylinder engine)
- 6...: Transmission unit
- 7 ...: Rear wheel
- 91...: Radiator

- 133...: Seat
- 150...: Footboard unit
- 160...: Step floor portion
- 161 ...: First footboard
- 162...: First support stay
- 162c...: First footboard support portion
- 163...: First cover
- 170...: Footrest portion
- 171...: Second footboard
- 172...: Second support stay
- 172a, 172b...: Stay pipe (frame member)
- 172d . . .: Second footboard support portion
- 173...: Second cover
- 180, 190...: Rubber bush (elastic member)
- 185, 195x...: 195, Height adjusting member
- 191...: Collar
- 195M...: Inclined surface
- 200...: Radiator shroud (radiator deflector)
- 210...: Reinforcing frame

## Claims

1. A footboard structure for a vehicle in which a footboard (161, 171) is connected to a body frame (2) via a support stay (162. 172), wherein a height adjusting member (185, 195) is arranged between a footboard support portion (162c, 172d) of the support stay (162, 172) and the footboard (161, 171) to enable adj ustment of a longitudinal or vertical position of the footboard (161, 171),
**characterized in that**,
the height adjusting member (185, 195) has an inclined surface (195M) that is formed as a surface that is inclined with respect to a bottom surface of the height adjusting member (185, 195).

2. The footboard structure for a vehicle according to claim 1,
**characterized in that**,
the footboard (185, 195) has a step floor portion (160) and a footrest portion (170).

3. The footboard structure for a vehicle according to any of the preceding claims,
**characterized in that**,
a fixing member that fixes the heel of a foot in position is provided in the footrest portion (170) so as to be movable.

4. The footboard structure for a vehicle according to any of the preceding claims,
**characterized in that**,
the footboard (185, 195) is supported on the footboard support portion (162c, 172d) of the support stay (162, 172) via an elastic member.

## Patentansprüche

1. Trittbrettkonstruktion für ein Fahrzeug, in welchem ein Trittbrett (161, 171) mit einem Karosserierahmen (2) über ein Trägersteg (162, 172) verbunden ist, wobei ein Höheneinstellelement (185, 195) zwischen einem Trittbrettträgerabschnitt (162c, 172d) des Trägerstegs (162, 172) und dem Trittbrett (161, 171) angeordnet ist, um eine Einstellung einer longitudinalen oder vertikalen Position des Trittbretts (161, 171) zu ermöglichen,
**dadurch gekennzeichnet, dass**
das Höheneinstellelement (185, 195) eine geneigte Oberfläche (195M) aufweist, die als eine Oberfläche gebildet ist, welche hinsichtlich einer Bodenoberfläche des Höheneinstellelements (185, 195) geneigt ist.

2. Trittbrettkonstruktion für ein Fahrzeug gemäß Anspruch 1,
**dadurch gekennzeichnet, dass**
das Trittbrett (185, 195) einen Trittbrettabschnitt (160) und einen Fußablageabschnitt (170) aufweist.

3. Trittbrettkonstruktion für ein Fahrzeug gemäß irgendeinem der vorherigen Ansprüche,
**dadurch gekennzeichnet, dass**
ein Fixierelement, welches die Ferse eines Fußes in einer Position fixiert, in dem Fußablageabschnitt (170) derartig vorgesehen ist, dass es beweglich ist.

4. Trittbrettkonstruktion für ein Fahrzeug gemäß irgendeinem der vorherigen Ansprüche,
**dadurch gekennzeichnet, dass**
das Trittbrett (185, 195) auf dem Trittbrettträgerabschnitt (162c, 172d) des Trägerstegs (162, 172) über ein elastisches Element gelagert ist.

## Revendications

1. Structure d'appuie-pied pour un véhicule dans lequel un appuie-pied (161, 171) est relié à un cadre (2) par l'intermédiaire d'un étai de support (162, 172), dans laquelle un élément d'ajustement de hauteur (185, 195) est agencé entre une partie de support d'appuie-pied (162c, 172d) de l'étai de support (162, 172) et l'appuie-pied (161, 171) pour permettre l'ajustement d'une position longitudinale ou verticale de l'appuie-pied (161, 171),
**caractérisée en ce que**,
l'élément d'ajustement de hauteur (185, 195) comporte une surface inclinée (195M) qui est formée en tant que surface qui est inclinée par rapport à une surface inférieure de l'élément d'ajustement de hauteur (185, 195).

2. Structure d'appuie-pied pour un véhicule selon la revendication 1,
**caractérisée en ce que**,
l'appuie-pied (185, 195) comporte une partie de plancher (160) et une partie de repose-pied (170).

3. Structure d'appuie-pied pour un véhicule selon l'une quelconque des revendications précédentes,
**caractérisée en ce que**,
un élément de fixation qui fixe le talon d'un pied en position est prévu dans la partie de repose-pied (170) de manière à ce qu'il soit mobile.

4. Structure d'appuie-pied pour un véhicule selon l'une quelconque des revendications précédentes,
**caractérisée en ce que**,
l'appuie-pied (185, 195) est supporté sur la partie de support d'appuie-pied (162c, 172d) de l'étai de support (162, 172) par l'intermédiaire d'un élément élastique.
